# Europäisches Patentamt
# European Patent Office · 
# Office européen des brevets

(19)

(11) Veröffentlichungsnummer: **0 123 156**
**B1**

(12) # EUROPÄISCHE PATENTSCHRIFT

(45) Veröffentlichungstag der Patentschrift:
04.11.87

(51) Int. Cl.⁴: **B 23 B 31/04**

(21) Anmeldenummer: **84103279.0**

(22) Anmeldetag: **24.03.84**

(54) **Mehrteiliges Spannsystem, insbesondere für rundlaufende Werkzeuge.**

(30) Priorität: **22.04.83 DE 3314591**

(43) Veröffentlichungstag der Anmeldung:
**31.10.84 Patentblatt 84/44**

(45) Bekanntmachung des Hinweises auf die Patenterteilung:
**04.11.87 Patentblatt 87/45**

(84) Benannte Vertragsstaaten:
**AT BE CH FR GB IT LI LU NL SE**

(56) Entgegenhaltungen:
**EP-A-0 061 075**
**CH-A-368 345**
**DE-A-1 915 558**
**FR-A-1 473 259**
**GB-A-567 448**
**US-A-1 615 233**
**US-A-2 392 519**
**US-A-2 403 861**

(73) Patentinhaber: **MONTANWERKE WALTER GMBH, Derendinger Strasse 53 Postfach 2049, D-7400 Tübingen 1 (DE)**

(72) Erfinder: **Töllner, Klaus, Dr.- Ing., Arberstrasse 8, D-7033 Herrenberg- Kuppingen (DE)**

(74) Vertreter: **Rüger, Rudolf, Dr.- Ing., Webergasse 3 Postfach 348, D-7300 Esslingen/Neckar (DE)**

EP 0 123 156 B1

## Beschreibung

Die Erfindung betrifft ein mehrteiliges Spannsystem, insbesondere für rundlaufende Werkzeuge, mit einem gegebenenfalls einen Spannschaft tragenden Aufnahmekörper, der an einer Stirnseite eine rechtwinklig zur Drehachse verlaufende Anlagefläche und eine koaxiale kegelige Aufnahmebohrung aufweist, sowie mit einem vorzugsweise als Werkzeugträger ausgebildeten Anschlußteil, das auf einer Stirnseite ebenfalls mit einer rechtwinklig zu der Drehachse verlaufenden Anlagefläche und mit einem koaxialen in die kegelige Aufnahmebohrung passenden kegeligen Zentrierzapfen ausgebildet ist, sowie mit einer den Aufnahmekörper mit dem Anschlußteil unter gegenseitiger Anlage der beiden Anlageflächen axial verspannenden lösbaren Spannvorrichtung.

Beispielsweise bei mehrteiligen Werkzeugspannsystemen für Werkzeugmaschinen mit automatischem Werkzeugwechsel tritt das Problem auf, daß beim Werkzeugwechsel das das Werkzeug tragende Anschlußteil mit hoher Rundlaufgenauigkeit mit dem mit der Werkzeugmaschinenspindel verbundenen Aufnahmekörper verspannt werden muß. Dazu sind in der Praxis Spannsysteme bekannt geworden, bei denen der Zentrierzapfen des Anschlußteiles zylindrisch ausgebildet ist und in eine engtolerierte zylindrische Aufnahmebohrung des Aufnahmekörpers eingeschoben werden kann bis an dem Anschlußteil und dem Aufnahmekörper stirnseitig vorgesehene Planflächen aneinander zur Anlage kommen. Über die aneinander anliegenden Planflächen können zwar die bei einer Zerspanungsbearbeitung auftretenden rechtwinklig zur Drehachse wirkenden Kräfte aufgenommen werden, doch ist die erzielbare Rundlaufgenauigkeit wegen der Bearbeitungstoleranzen der Zylinderflächen des Zentrierzapfens und der Aufnahmebohrung begrenzt. Auch ist die Verbindung zwischen dem Aufnahmekörper und dem Anschlußteil gegen Verkanten beim Zusammenfügen der beiden Teile empfindlich. Wird der Zentrierzapfen nämlich nicht genau koaxial auf die Aufnahmebohrung ausgerichtet, so treten Beschädigungen an dem Zentrierzapfen oder in der Aufnahmebohrung auf, die die Rundlaufgenauigkeit beeinträchtigen oder gar ein Lösen der Verbindung zwischen den beiden Teilen erschweren oder unmöglich machen. Um das Zusammenfügen zu erleichtern, hat man deshalb den Zentrierzapfen und die Aufnahmebohrung schon gestuft ausgebildet.

Bei anderen bekannten Spannsystemen wird eine Kegelverbindung gemäß DIN 2080 zwischen dem Anschlußteil und dem Aufnahmekörper verwendet. Die Kegelwinkeltoleranzen sind dabei so gelegt, daß der Außenkegel des Zentrierzapfens auf jeden Fall an seinem Größtdurchmesser trägt, um damit eine größtmögliche Stabilität der Verbindung zu erzielen. Bei Einsatzfällen, bei denen sehr große Kräfte rechtwinklig zur Drehachse auf das Anschlußteil einwirken, können diese aber von den zusammenwirkenden Kegelflächen allein nicht mehr stabil genug aufgenommen werden.

Wenn deshalb mit dem Auftreten größerer Seitenkräfte gerechnet werden muß, müssen zusätzlich an dem Aufnahmekörper und an dem Anschlußteil exakt geschliffene, rechtwinklig zu der Drehachse verlaufende Planflächen vorgesehen werden, die beim Zusammenfügen der beiden Teile durch die Spannvorrichtung in gegenseitiger Anlage verspannt werden. Eine einen Aufnahmekegel und eine Plananlage aufweisende Verbindungsstelle zwischen zwei Teilen stellt jedoch fertigungsmäßig höchste Anforderungen an die Bearbeitungsgenauigkeit, weil sie überbestimmt ist. Werden der Außenkegel des Zentrierzapfens und der Innenkegel der Aufnahmebohrung genau ineinander passend ausgeführt, so verbleibt zwischen den beiden Planflächen ein Spalt oder aber, wenn die beiden Planflächen genau aneinander anliegen sollen, muß zwischen dem Außenkegel und dem Innenkegel eine gewisse Luft vorhanden sein.

Aufgabe der Erfindung ist es deshalb, ein Spannsystem zu schaffen, bei dem auch beim Auftreten großer, seitlich auf das Anschlußteil wirkender Kräfte eine hohe Rundlaufgenauigkeit gewährleistet ist, ohne daß dazu übertriebene Anforderungen an die Herstellungsgenauigkeit gestellt oder Schwierigkeiten beim Anfügen des Anschlußteiles an den Aufnahmekörper (bspw. Verkantungsgefahr) in Kauf genommen werden müssen.

Zur Lösung dieser Aufgabe ist das eingangs genannte Spannsystem erfindungsgemäß dadurch gekennzeichnet, daß der Innenkegel der Aufnahmebohrung einen um einen vorbestimmten kleinen Winkelwert größeren Kegelwinkel als der Außenkegel des Zentrierzapfens aufweist, derart, daß beim Einfügen des Zentrierzapfens in die Aufnahmebohrung der Außenkegel zunächst im Bereiche seines kleinsten Durchmessers mit dem Innenkegel in Berührung kommt und daß durch entsprechende Ausbildung des Zentrierzapfens und/oder des Aufnahmekörpers bei dem bis zur gegenseitigen Anlage der beiden Anlageflächen erfolgenden axialen Verspannen des Anschlußteiles mit dem Aufnahmekörper wenigstens einer der beiden Kegel bis zur großflächigen Anlage der beiden Kegel aneinander elastisch verformbar ist.

Der kegelige Zentrierzapfen kann in einfacher Weise ohne allzugroße Anforderungen an die Sorgfalt in die kegelige Aufnahmebohrung des Aufnahmekörpers eingeschoben werden, bis er im Bereiche seines kleinsten Durchmessers an dem Innenkegel der Aufnahmebohrung zur Anlage kommt, womit selbsttätig eine Zentrierung des Anschlußteiles bezüglich des Aufnahmekörpers erfolgt. Bei der im Verlaufe des weiteren Festziehens auftretenden elastischen Verformung des Außen- und/oder des Innenkegels bleibt diese Zentrierung exakt erhalten, wobei gleichzeitig die Anlagefläche des Anschlußteiles zur satten Anlage an der Anlagefläche des Aufnahmekörpers gebracht wird und die beiden Teile durch die Spannvorrichtung in diesem Zustand gegeneinander verspannt gehalten werden. Damit ist einerseits eine hervorragende Rundlaufgenauigkeit gesichert, während andererseits die Verbindung zwischen dem Anschlußteil und dem Aufnahmekörper auch große, seitlich auf das Anschlußteil wirkende Kräfte aufnehmen kann, wie sie bspw. bei der Schwerzerspanungsbearbeitung auftreten.

Besonders vorteilhaft hat es sich erwiesen, wenn der Winkelwert, um den sich die Kegelwinkel des Außen- und des Innenkegels voneinander unterscheiden, in dem Bereich kleiner/gleich 20 Winkelminuten liegt.

Grundsätzlich können sowohl der Aufnahmekörper als auch der Zentrierzapfen im Bereiche des Innen- bzw. des Außenkegels durch geeignete konstruktive Maßnahmen mit einer solchen Wandstärke ausgebildet werden, daß die gewünschte elastische Verformung möglich ist. Sehr einfache konstruktive Verhältnisse ergeben sich aber, wenn im wesentlichen lediglich der Außenkegel des eine koaxiale Bohrung aufweisenden Zentrierzapfens elastisch verformbar ist. Die Bohrung kann nämlich ohne große Mühe in ihrem Durchmesser so gewählt und im übrigen derart gestaltet werden, daß der Zentrierzapfen im Bereiche seines Außenkegels die notwendige elastische Verformbarkeit erhält.

Wenn die Anlageflächen des Aufnahmekörpers und des Anschlußteiles exakt rechtwinklig zu der Drehachse verlaufende Planflächen sind, kann - bedingt durch vorhandene Herstellungstoleranzen - die Gefahr auftreten, daß zwischen den Anlageflächen im Bereiche deren größten Durchmessers ein keilförmiger Ringspalt verbleibt, durch den die Biegesteifigkeit des Spannsystems beeinträchtigt wäre. Um dies auszuschließen, ist es vorteilhaft, wenn die Anlageflächen derart gestaltet sind, daß sie beim Verspannen zunächst im Bereiche des größten Durchmessers zur gegenseitigen Anlage kommen. Im weiteren Verlauf der axialen Spannbewegung tritt dann in diesem Bereiche des größten Durchmessers eine geringfügige elastische Verformung ein, unter deren Wirkung die Anlageflächen radial von außen nach innen fortschreitend zunehmend in großflächige gegenseitige Anlage übergehen.

Um dies zu erreichen, kann wenigstens eine der Anlageflächen kegelig sein, doch kann die Anordnung auch derart getroffen sein, daß wenigstens eine der Anlageflächen im Bereiche ihres größten Durchmessers einen axial geringfügig vorstehenden Ringflächenbereich aufweist, der in der erwähnten Weise elastisch verformbar ist.

In der Zeichnung ist ein Ausführungsbeispiel des Gegenstandes der Erfindung dargestellt. Es zeigen:

Fig. 1 ein Werkzeugspannsystem gemäß der Erfindung, im axialen Schnitt, in einer Seitenansicht, und

Fig. 2 das Werkzeugspannsystem nach Fig. 1, im Ausschnitt und in einer Seitenansicht, unter Veranschaulichung des Zentrierzapfens, des Anschlußteiles und der Aufnahmebohrung des Aufnahmekörpers, in einem anderen Maßstab.

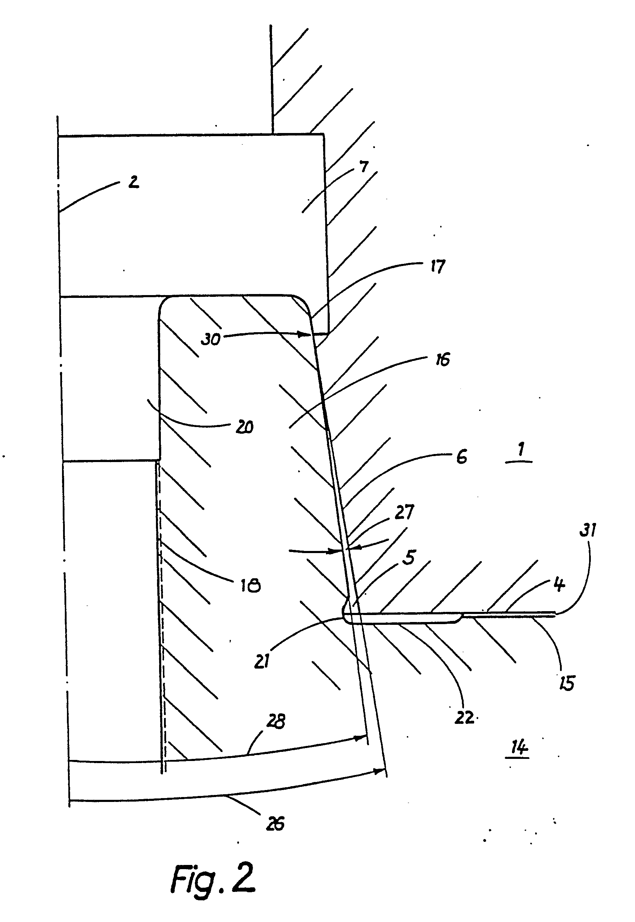

Ein im wesentlichen zylindrischer Aufnahmekörper 1 weist einen zu der Drehachse 2 koaxialen, als Steilkegel ausgebildeten Spannschaft 3 auf, mit dem er in bekannter Weise mit der nicht weiter dargestellten Spindel einer Werkzeugmaschine, bspw. einer Fräsmaschine, verbunden werden kann. An der dem Spannschaft 3 gegenüberliegenden Stirnseite ist der Aufnahmekörper 1 mit einer rechtwinklig zu der Drehachse 2 verlaufenden geschliffenen Planfläche 4 versehen, von der aus sich eine zu der Drehachse 2 koaxiale Aufnahmebohrung 5 in den Aufnahmekörper 1 erstreckt. Die Aufnahmebohrung 5 ist kreiskegelig ausgebildet; ihr Innenkegel ist mit 6 bezeichnet (Fig. 2). An die Aufnahmebohrung 5 schließt sich eine koaxiale zylindrische Ausdrehung 7 an, deren Durchmesser größer ist als der Kleinstdurchmesser des Innenkegels 6. In eine auf die Ausdrehung 7 in Achsrichtung folgende, zu der Drehachse 2 ebenfalls koaxiale Bohrung 8 ist ein Stützring 9 eingesetzt, der durch radiale Gewindestifte 10 lagefest fixiert ist und zur Abstützung einer Zylinderkopfschraube 11, bspw. mit Innensechskant 12, dient, deren Innensechskant 12 über eine Durchgangsbohrung 13 von der Rückseite des Aufnahmekörpers 1 her mittels eines entsprechenden Schraubenschlüssels zugängig ist.

Mit dem Aufnahmekörper 1 ist mit hoher Rundlaufgenauigkeit ein koaxiales zylindrisches Anschlußteil 14 verbunden, das das als Träger für ein nicht weiter dargestelltes Werkzeug, bspw. ein Fräswerkzeug, dient.

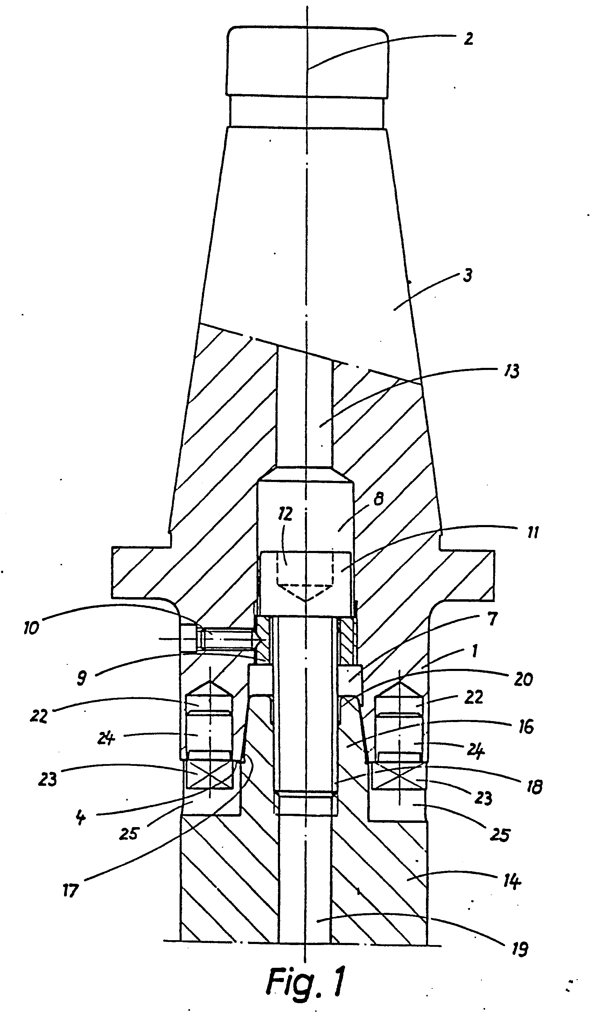

Das Anschlußteil 14 ist an seiner dem Aufnahmekörper 1 zugewandten Stirnseite mit einer Planfläche 15 (Fig. 2) ausgebildet, die rechtwinklig zu der Drehachse 2 verläuft und geschliffen ist. Außerdem trägt das Anschlußteil 14 auf dieser Stirnseite einen koaxialen vorstehenden Zentrierzapfen 16, der ebenfalls kegelig ausgebildet und dessen Außenkegel mit 17 bezeichnet ist. Durch den Zentrierzapfen 16 erstreckt sich eine koaxiale Gewindebohrung 18, in die die Zylinderkopfschraube 11 eingeschraubt ist (Fig. 1), die gemeinsam mit der Gewindebohrung 18 eine axial wirkende Spannvorrichtung bildet. Oberhalb des Gewindeteils der Zylinderkopfschraube 11 setzt sich die Gewindebohrung 18 in einer koaxialen, glattwandigen, zylindrischen Bohrung 19 des Anschlußteiles 14 fort.

Im Bereiche seiner freien Stirnseite ist der Zentrierzapfen 16 mit einer zu der Drehachse 2 koaxialen Ausdrehung 20 versehen, die sich über einen bestimmten Teil seiner axialen Länge erstreckt und deren Bedeutung im einzelnen noch erläutert werden wird.

Im Bereiche seiner Wurzel ist der Zentrierzapfen 16 bei 21 (Fig. 2) mit einer umlaufenden rinnenartigen Vertiefung ausgebildet, an die sich eine kreisringförmige Vertiefung 22 im Bereiche der Planfläche 15 anschließt. Beide Vertiefungen 21, 22 dienen zur Erleichterung der Bearbeitung des Außenkegels 17 und der Planfläche 15.

Schließlich weist der Aufnahmekörper 1 im Bereiche seiner Planfläche 4 zwei achsparallele, auf gegenüberliegenden Seiten der Drehachse 2 angeordnete zylindrische Sackbohrungen 22 auf, in die zwei über die Planfläche 4 vorstehende Mitnehmer 23 mit einem zylindrischen Schaft 24 eingepreßt sind. Die im Querschnitt rechteckigen Mitnehmer 23 greifen in entsprechende Nuten 25 im Bereiche der Planfläche 15 des Anschlußteiles 14 ein und gewährleisten eine lagerichtige, drehfeste Verbindung zwischen dem Anschlußteil 14 und dem Aufnahmekörper 1.

Wie insbesondere aus Fig. 2 zu entnehmen, ist der Kegelwinkel 26 des Innenkegels 6 der Aufnahmebohrung 5 um einen kleinen, bei 27 angedeuteten Winkelwert größer als der Kegelwinkel 28 des Außenkegels 17 des Zentrierzapfens 16. Der Winkelwert 27 liegt normalerweise in der Größenordnung von kleiner/gleich 20 Winkelminuten; er kann, insbesondere bei sehr großen Zentrierzapfen 16 und Aufnahmebohrungen 5, auch größer sein.

Der Unterschied zwischen dem Kegelwinkel 26 des Innenkegels 6 und dem Kegelwinkel 28 des Außenkegels 17 bewirkt, daß beim Einfügen des Zentrierzapfens 16 in die Aufnahmebohrung 5 der Außenkegel 17 mit dem Innenkegel 6 zunächst im Bereiche seines kleinsten Durchmessers - bei 30 - in Berührung kommt. Dies ist dadurch ermöglicht, daß der Zentrierzapfen 16 mit seinem Ende frei in die Ausdrehung 7 größeren Durchmessers ragt.

Wird nun anschließend die Innensechskantschraube 11 festgezogen, so wird der Zentrierzapfen 16 mit entsprechender Kraft weiter in die Aufnahmebohrung 5 hineingezogen. Dabei erfährt der Außenkegel 17 des Zentrierzapfens 16, ausgehend von dem Bereich 30 seines kleinsten Durchmessers, eine zunehmende elastische Verformung, so daß der Außenkegel 17 über immer weitere Flächenbereiche an dem Innenkegel 6 zur Anlage kommt, bis sich eine satte großflächige Anlage zwischen den beiden Kegeln ergibt, wenn die beiden Planflächen 4, 15 aneinander anliegen, d.h. der in Fig. 2 bei 31 angedeutete Spalt zwischen diesen beiden Planflächen 4, 15 völlig geschlossen ist.

Die elastische Verformung im Sinne der Verkleinerung des Außendurchmessers des Zentrierzapfens 16 im Bereiche seines Außenkegels 17 ist insbesondere durch die Ausdrehung 20 ermöglicht, deren Durchmesser derart gewählt ist, daß der die Ausdrehung 20 umgebende ringförmige Teil des Zentrierzapfens 16 elastisch nachgeben kann.

Alternativ könnte die Anordnung auch derart getroffen sein, daß der Aufnahmekörper 1 in dem den Innenkegel 6 umgebenden Bereich durch entsprechende Bemessung seiner Wandstärke, durch Anordnung von Ringnuten oder dergl. so geschwächt ist, daß der Innenkegel 6 um das erforderliche Maß elastisch aufweitbar ist. Es wäre auch denkbar, sowohl den Außenkegel 17 als auch den Innenkegel 6 elastisch verformbar zu gestalten.

Die miteinander zusammenwirkenden beiden Kegel 6, 17 gewährleisten eine exakte Zentrierung des Anschlußteiles 14 bezüglich des Aufnahmekörpers 1, während die in satter gegenseitiger Anlage miteinander verspannten Planflächen 4, 15 eine genau fluchtende Ausrichtung des Anschlußteiles 14 bezüglich des Aufnahmekörpers 1 sicherstellen und im übrigen die Aufnahme auch von großen, seitlich auf das Anschlußteil 14 wirkenden Kräften ermöglichen.

Bei dem erläuterten Ausführungsbeispiel sind der Aufnahmekörper 1 und das Anschlußteil 14 jeweils mit einer genau rechtwinklig zu der Drehachse 2 verlaufenden geschliffenen Planfläche 4 bzw. 15 als Anlageflächen ausgebildet. Um unabhängig von Herstellungstoleranzen sicherzustellen, daß die beiden Anlageflächen beim Verspannen im Bereiche ihres größten Durchmessers in gegenseitige Anlage kommen, kann die Planfläche 4 und/oder 15 durch eine leicht kegelige Anlagefläche ersetzt sein, die schräg nach innen zur Drehachse 2 verläuft. Alternativ könnte die Anordnung auch derart getroffen sein, daß wenigstens eine der Planflächen 4,15 im Bereiche ihres größten Durchmessers einen axial geringfügig vorstehenden Ringflächenbereich aufweist, so daß sich grundsätzlich die gleiche Anordnung ergibt, wie sie in Fig.2 bezüglich der Vertiefung 22 und der Planfläche 15 veranschaulicht ist.

In beiden Fällen wird bei der axialen Verspannung eine elastische Verformung im Bereiche des größten Durchmessers der dort zunächst in gegenseitige Anlage kommenden Anlageflächen eintreten, die dann radial nach innen zu fortschreitend zu einer großflächigen gegenseitigen Anlage der Anlageflächen in einer ringförmigen Berührungsfläche führt.

Auf diese Weise wird mit Sicherheit ausgeschlossen, daß zwischen den Anlageflächen im Bereiche deren größten Durchmessers ein im Querschnitt keilförmiger Ringspalt verbleibt, der die Biegesteifigkeit des Spannsystems beeinträchtigen könnte.

Das Spannsystem wurde im Vorstehenden in der Anwendung auf ein Werkzeugspannsystem beschrieben. Grundsätzlich ist aber der erfindungsgemäße Gedanke auch für die Verbindung anderer Teile miteinander geeignet, bei denen es darauf ankommt, daß die miteinander verspannten Teile sich durch hohe Rundlaufgenauigkeit, auch unter schweren Seitenbelastungsverhältnissen, auszeichnen.

## Patentansprüche

1. Mehrteiliges Spannsystem, insbesondere für rundlaufende Werkzeuge, mit einem gegebenenfalls einen Spannschaft (3) tragenden Aufnahmekörper (1), der an einer Stirnseite eine etwa rechtwinklig zu der Drehachse (2) verlaufende Anlagefläche (4) und eine koaxiale kegelige Aufnahmebohrung (5) aufweist, sowie mit einem vorzugsweise als Werkzeugträger ausgebildeten Anschlußteil (14), das auf einer Stirnseite ebenfalls mit einer rechtwinklig zu der Drehachse verlaufenden Anlagefläche (15) und mit einem koaxialen, in die kegelige Aufnahmebohrung passenden kegeligen Zentrierzapfen (16) ausgebildet ist, sowie mit einer den Aufnahmekörper mit dem Anschlußteil unter gegenseitiger Anlage der beiden Anlageflächen (4, 15) axial verspannenden lösbaren Spannvorrichtung, dadurch gekennzeichnet, daß der Innenkegel (6) der Aufnahmebohrung (5) einen um einen vorbestimmten kleinen Winkelwert (27) größeren Kegelwinkel (26) als der Außenkegel (17) des Zentrierzapfens (16) aufweist, derart, daß beim Einfügen des Zentrierzapfens (16) in die Aufnahmebohrung (5) der Außenkegel (17) zunächst im Bereiche seines kleinsten Durchmessers (bei 30) mit dem Innenkegel (6) in Berührung kommt und daß durch entsprechende Ausbildung des Zentrierzapfens (16) und/oder des Aufnahmekörpers (1) bei dem bis zur gegenseitigen Anlage der beiden Anlageflächen (4, 15) erfolgenden axialen Verspannen des Anschlußteiles (14) mit dem Aufnahmekörper (1) wenigstens einer der beiden Kegel (6 oder 17) bis zur großflächigen Anlage der beiden Kegel aneinander elastisch verformbar ist.

2. Spannsystem nach Anspruch 1, dadurch gekennzeichnet, daß der Winkelwert (27) in dem Bereich kleiner/gleich 20 Winkelminuten liegt.

3. Spannsystem nach Anspruch 1 oder 2, dadurch gekennzeichnet, daß im wesentlichen lediglich der Außenkegel (17) des eine koaxiale Bohrung (20, 18) aufweisenden Zentrierzapfens (16) elastisch verformbar ist.

4. Spannsystem nach einem der vorhergehenden Ansprüche, dadurch gekennzeichnet, daß die Anlageflächen (4, 15) derart gestaltet sind, daß sie beim Verspannen zunächst im Bereiche des größten Durchmessers zur gegenseitigen Anlage kommen.

5. Spannsystem nach Anspruch 4, dadurch gekennzeichnet, daß wenigstens eine der Anlageflächen (4, 15) kegelig ist.

6. Spannsystem nach Anspruch 4, dadurch gekennzeichnet, daß wenigstens eine der Anlageflächen (4,15) im Bereiche ihres größten Durchmessers einen axial geringfügig vorstehenden Ringflächenbereich aufweist.

## Claims

1. A multi-part clamping system, more particularly for rotary tools, having a receiving member (1) which if necessary bears a clamping stem (3) and has at one end face a bearing surface (4) extending at right angles to the axis (2) of rotation and a coaxial conical receiving bore (5); a connecting member (14) which is preferably constructed in the form of a tool support and also has at an end face a bearing surface (15) extending at right angles to the axis of rotation and a coaxial, conical centring pin (16) which fits into the conical receiving bore; and a releasable clamping device which axially clamps the receiving member to the connecting member, the two bearing surfaces (4,15) bearing against one another, characterised in that the inner cone (6) of the receiving bore (5) has a conical angle (26) which is larger by a predetermined small angular value (27) than the outer cone (17) of the centring pin (16), so that when the centring pin (16) is inserted into the receiving bore of the outer cone (17) it first contacts the inner cone (6) in the zone of its smallest diameter (at 30) and the centring pin (16) and/or the receiving member (1) are so constructed that when the connecting member (14) is axially clamped to the receiving member (1) until the two bearing surfaces (4,15) bear against one another, at least one of the two cones (6 or 17) can be resiliently deformed until the two cones bear against one another over a larger area.

2. A clamping system according to claim 1 characterised in that the angular value (27) lies in the range smaller than/equal to 20 angular minutes.

3. A clamping system according to claims 1 or 2, characterised in that substantially only the outer cone (17) of the centring pin (16) formed with a coaxial bore (20, 18) can be resiliently deformed.

4. A clamping system according to one of the preceding claims, characterised in that the bearing surfaces (4,15) are so constructed that during clamping they bear against one another first in the area of the maximum diameter.

5. A clamping system according to claim 4, characterised in that at least one of the bearing surfaces (4,15) is conical.

6. A clamping system according to claim 4, characterised in that at least one of the bearing surfaces (4,15) has in the zone of its maximum diameter a slightly axially projecting annular surface area.

## Revendications

1. Système de serrage à plusieurs parties, notamment pour outils en rotation, comprenant un corps de réception (1), portant éventuellement une queue de serrage (3), qui présente sur une face frontale une surface d'appui (4) à peu près à angle droit par rapport à l'axe de rotation (2) et un alésage de réception (5) conique coaxial; une pièce de raccordement (14) qui est realisée de préférence comme porte-outil et qui comporte sur une face frontale également une surface d'appui (15), à angle droit par rapport à l'axe de rotation, et une broche de centrage (16) conique s'ajustant dans l'alésage de réception conique; et un dispositif de serrage amovible serrant axialement le corps de réception contre la pièce de raccordement en appliquant l'une contre l'autre les deux surfaces d'appui (4, 15), caractérisé en ce que le cône intérieur (6) de l'alésage de réception (5) présente un angle de cône (26) supérieur d'une petite valeur d'angle prédéterminée (27) au cône extérieur (17) de la broche de centrage (16), de sorte que, lors de l'introduction de la broche de centrage (16) dans l'alésage de réception (5), le cône exterieur (17) entre en contact, d'abord dans la zone de son plus petit diamètre (en 30), avec le cône intérieur (6) et que, par la réalisation approptiée de la broche de centrage (16) et/ou du corps de réception (1), lors du serrage axial de la pièce de raccordement (14) contre le corps de réception (1) jusqu'à l'entrée en contact des deux surfaces d'appui (4, 15), au moins un des deux cônes (6 ou 17) peut être déformé de manière élastique jusqu'à l'entrée en contact des deux cônes sur une grande surface.

2. Système de serrage selon la revendication 1, caractérisé en ce que la valeur d'angle (27) se trouve dans la plage inférieure/egale à 20 minutes d'angle.

3. Système de serrage selon la revendication 1 ou 2, caractérisé en ce qu'essentiellement seul le cône exterieur (17) de la broche de centrage (16), présentant un alésage (20, 18) coaxial, est déformable de manière élastique.

4. Système de serrage selon l'une quelconque des revendications précédentes, caractérisé en ce que les surfaces d'appui (4, 15) sont réalisées de manière que, lors du serrage, elles entrent en contact d'abord dans la zone du plus grand diamètre.

5. Système de serrage selon la revendication 4, caractérisé en ce qu'au moins une des surfaces d'appui (4, 15) est conique.

6. Système de serrage selon la revendication 4, caractérisé en ce qu'au moins une des surfaces d'appui (4, 15) présente, dans la zone de son plus grand diamètre, une zone de surface annulaire légèrement en saillie dans le sens axial.

**Fig. 1**

Fig. 2